# EUROPEAN PATENT APPLICATION

(11) **EP 4 755 857 A1**
(43) Date of publication of application: **10.06.2026**
(21) Application number: 25802622.8
(22) Date of filing: 27.03.2025
(51) Int. Cl.: C03C 17/00, C03C 17/30

(54) **GLASS-BASED STRUCTURAL MEMBER, PREPARATION METHOD THEREFOR, AND USE THEREOF**

(30) Priority: 14.05.2024 CN 202410598990
(71) Applicant: Huawei Technologies Co., Ltd., Shenzhen, Guangdong 518129 (CN)
(72) Inventor: ZHANG, Yanming, Shenzhen, Guangdong 518129 (CN); HUANG, Yihong, Shenzhen, Guangdong 518129 (CN); JIANG, WenJie, Shenzhen, Guangdong 518129 (CN)
(74) Representative: MERH-IP Matias Erny Reichl Hoffmann Patentanwälte PartG mbB
(86) International application number: PCT/CN2025/085509
(87) International publication number: WO 2025/236873

(57) **Abstract**

Embodiments of this application provide a glass structural member, a method for preparing the same, and application thereof. The preparation method includes: performing, on a glass substrate, pre-coating cleaning selected from at least one of alkali cleaning, acid cleaning, and plasma treatment, such that a water drop contact angle of a surface of the glass substrate is within a range of 10° to 30°; forming a dielectric layer including a silicon dioxide layer on a surface of one side of the glass substrate that has undergone the pre-coating cleaning; and forming an anti-fingerprint film on the silicon dioxide layer. A Si-CH₂ bond is formed between the silicon dioxide layer and the anti-fingerprint film. After the glass substrate undergoes the pre-coating cleaning, a binding force between the glass substrate and the SiO₂ layer formed on the glass substrate, and a binding force between the anti-fingerprint film and the SiO₂ layer are strong. Therefore, thicknesses of the SiO₂ layer and the anti-fingerprint film can be large, and an overall coat has a stable structure. The glass structural member can have good abrasion resistance, good scratch resistance, and a lasting anti-fingerprint effect, and can better meet application requirements in fields such as electronic devices.

## Description

This application claims priority to Chinese Patent Application No. 202410598990.7, filed with the China National Intellectual Property Administration on May 14, 2024 and entitled "GLASS STRUCTURAL MEMBER, METHOD FOR PREPARING SAME, AND APPLICATION THEREOF", which is incorporated herein by reference in its entirety.

### TECHNICAL FIELD

This application relates to the technical field of glass, and specifically, to a glass structural member, a method for preparing the same, and application thereof.

### BACKGROUND

Electronic devices such as smartphones usually use a glass structural member as a display cover, and the glass structural member usually includes a glass substrate, a SiO₂ base layer, and an anti-fingerprint film (Anti-fingerprint film, AF film for short) that are stacked. However, abrasion resistance and scratch resistance of an existing glass structural member are not high, which affects use reliability of the electronic device. To improve scratch resistance of the glass component, a glass structural member that includes a glass substrate, a super-hard coat (such as a diamond-like coat), and an AF film that are stacked is also prepared in the industry. However, the super-hard coat usually causes a sharp increase in costs of the glass structural member, reduces a fingerprint-resistant life of the glass structural member, and has a limited application scope. Therefore, it is necessary to provide a glass structural member with good abrasion resistance, scratch resistance, and anti-fingerprint effect and a method for preparing the same.

### SUMMARY

In view of this, embodiments of this application provide a glass structural member, a method for preparing the same, and application thereof. The glass structural member can have good abrasion resistance, scratch resistance, and anti-fingerprint effect, and can better meet application requirements in fields such as electronic devices.

Specifically, a first aspect of embodiments of this application provides a glass structural member. The glass structural member includes a glass substrate, and a dielectric layer and an anti-fingerprint film that are sequentially stacked on a surface of one side of the glass substrate. The dielectric layer includes a silicon dioxide (SiO₂) layer disposed close to one side of the anti-fingerprint film. A constituent of the anti-fingerprint film includes a -CH₂- structure. A Si-CH₂ bond is formed between the silicon dioxide layer and the anti-fingerprint film.

In the foregoing glass structural member, the Si-CH₂ bond is formed between the SiO₂ layer and the anti-fingerprint film, so that a binding force between the anti-fingerprint film and the SiO₂ layer can be strong, and a thickness of the anti-fingerprint film can be made large, so as to ensure that the glass structural member 200 has a lasting anti-fingerprint effect and also help improve abrasion resistance of the glass structural member. In addition, the Si-CH₂ bond is formed between the SiO₂ layer and the anti-fingerprint film, so that a structure of the SiO₂ layer can be stable, and a thickness of the SiO₂ layer can be large. In this case, abrasion resistance and scratch resistance of the glass structural member can be improved.

In an implementation of this application, a sum of a thickness of the dielectric layer and a thickness of the anti-fingerprint film is 70 nm or greater. Based on the fact that the Si-CH₂ bond is formed between the SiO₂ layer and the anti-fingerprint film, the sum of the thicknesses of the two coats can be at a high level, so that the glass structural member has abrasion resistance, scratch resistance, and an anti-fingerprint effect.

In an implementation of this application, a thickness of the silicon dioxide layer is 16 nm or greater. The thickness of the SiO₂ layer may be large and the SiO₂ layer may not be easy to fall off, so that the glass structural member has good abrasion resistance and scratch resistance, and alkaline sweat resistance of the glass structural member is improved.

In some implementations of this application, the thickness of the silicon dioxide layer is within a range of 18 nm to 50 nm. The thickness of the SiO₂ layer is within this range, so that the glass structural member can have good abrasion resistance, scratch resistance, and alkaline sweat resistance, and the anti-fingerprint film disposed on the SiO₂ layer can have a large thickness and good anti-fingerprint durability.

In an implementation of this application, the thickness of the anti-fingerprint film is 50 nm or greater. As described above, because the Si-CH₂ bond is formed between the anti-fingerprint film and the SiO₂ layer, the anti-fingerprint film can have a large thickness and is still not easy to fall off.

In some implementations of this application, the thickness of the anti-fingerprint film is within a range of 60 nm to 100 nm. An appropriate thickness of the anti-fingerprint film enables the prepared glass structural member to have good anti-fingerprint durability and abrasion resistance without obviously affecting transparency of the original glass substrate.

In some implementations of this application, the dielectric layer further includes a silicon carbide layer or an aluminum oxide layer disposed close to one side of the glass substrate. Introducing the silicon carbide layer or the aluminum oxide layer can improve hardness of the glass structural member, which helps improve the scratch resistance of the glass structural member.

In some implementations of this application, a thickness of the silicon carbide layer or the aluminum oxide layer is less than 3 nm. The silicon carbide layer or the aluminum oxide layer has a small thickness, which can avoid reducing the binding force between the SiO₂ layer formed on the silicon carbide layer or the aluminum oxide layer and the glass substrate.

In an implementation of this application, in the glass structural member, an exposed surface of the anti-fingerprint film has an initial water drop contact angle of 110° or greater and a water drop contact angle of greater than 100° after being rubbed by an eraser 13000 times. The glass structural member provided in this application still has a water drop contact angle of greater than 100° after being rubbed by an eraser a large quantity of times. This indicates that the glass structural member has excellent abrasion resistance and retains good fingerprint smudge resistance. However, a maximum quantity of times of eraser rubbing that an existing glass structural member with a SiO₂ layer and an AF film can withstand hardly exceeds 4000.

In an implementation of this application, a load threshold for generating a scratch on the glass structural member under Mohs hardness of 6 is 750 g or greater. This can indicate that the glass structural member provided in this application has good scratch resistance. However, a load threshold for generating a scratch on the existing glass structural member with a SiO₂ layer and an AF film is basically 500 g or less.

In an implementation of this application, after the glass structural member soaked in simulated alkaline sweat with pH=9.5 is stored in a 70°C thermotank for 24 hours, no film falls off. This can indicate that the dielectric layer and the anti-fingerprint film of the glass structural member provided in this application are reliable, and in particular, can indicate that the film structure of the dielectric layer between the glass substrate and the anti-fingerprint film has good integrity and high compactness.

In some implementations of this application, the glass structural member has an average transmittance of ≥88% for light with a wavelength of 400 nm to 700 nm, and a Lab chromaticity b value satisfies: |b value|≤1.2. This indicates that the glass structural member with the dielectric layer and the anti-fingerprint film that have large thicknesses can still have excellent optical transparency and low coloration.

In an implementation of this application, the glass substrate is strengthened glass-ceramics or strengthened common glass that does not contain a crystal phase. Selection may be performed based on an application scenario of the foregoing glass structural member.

A second aspect of embodiments of this application provides a method for preparing a glass structural member, including:
performing, on a glass substrate, pre-coating cleaning selected from at least one of alkali cleaning, acid cleaning, and plasma treatment, such that a water drop contact angle of a surface of the glass substrate is within a range of 10° to 30°;
forming a dielectric layer including a silicon dioxide layer on a surface of one side of the glass substrate that has undergone the pre-coating cleaning; and
forming an anti-fingerprint film on the silicon dioxide layer, where a Si-CH₂ bond is formed between the silicon dioxide layer and the anti-fingerprint film.

In the foregoing method for preparing a glass structural member, after the glass substrate is controlled to have undergone the pre-coating cleaning to reach a specific surface state that "a water drop contact angle of a surface of the glass substrate is within a range of 10° to 30°", coating of the dielectric layer including SiO₂ and coating of the anti-fingerprint film are performed. In this way, the binding force between the SiO₂ layer formed on such glass substrate and the glass substrate is strong, and the binding force between the anti-fingerprint film and the SiO₂ layer is also strong. Moreover, the Si-CH₂ bond is formed. Therefore, the thicknesses of the SiO₂ layer and the anti-fingerprint film can be large, and the overall coat structure is stable, so that the prepared glass structural member has good abrasion resistance, good scratch resistance, and a lasting anti-fingerprint effect.

In an implementation of this application, a device used for the plasma treatment includes one or more of a box type, a flame type, and a glow type. A power of the plasma treatment is in a range of 500 W to 1500 W, and treatment time is in a range of 30s to 1200s. The plasma treatment is usually not performed in a coating device. Controlling the power and time of the plasma treatment within proper ranges can ensure that the foregoing desired surface state can be achieved without damaging the surface of the glass substrate or deteriorating scratch resistance and rubbing resistance of the glass substrate.

In an implementation of this application, both the dielectric layer and the anti-fingerprint film are formed by vacuum coating. During the coating of the dielectric layer, a vacuum degree is ≤5×10⁻³ Pa, and a coating rate is ≤2 nm/min. During the coating of the anti-fingerprint film, a vacuum degree is ≤5×10⁻³ Pa, and a coating rate is ≤ 10 nm/min. During the coating, a shielding gas is argon or nitrogen. The processing parameters of the vacuum coating can ensure the formation of the dielectric layer and the anti-fingerprint film with high purity, uniform thickness, good structural integrity, and good compactness.

In some implementations of this application, during or after the formation of the dielectric layer, the method further includes performing plasma cleaning. The plasma cleaning is performed in a coating device used for forming the dielectric layer. The plasma cleaning can help construct a surface of the dielectric layer suitable for binding to the to-be-formed anti-fingerprint film.

A third aspect of embodiments of this application provides a housing assembly, including the glass structural member according to the first aspect of embodiments of this application, or the glass structural member prepared by using the method according to the second aspect of embodiments of this application.

The housing assembly includes the foregoing glass structural member in this application, and can also have good abrasion resistance, scratch resistance, and anti-fingerprint effect. In some implementations, the housing assembly may further include another layer structure. In addition, the housing assembly may further include another film structure.

A fourth aspect of embodiments of this application provides an electronic device. The electronic device includes a housing assembled on an outer side of the electronic device and a circuit board located inside the housing. The housing includes the glass structural member according to the first aspect of embodiments of this application or the housing assembly according to the third aspect of this application.

In some implementations of this application, the housing includes a display cover assembled on a front side of the electronic device, and the display cover includes the glass structural member or the housing assembly. In other implementations of this application, the housing includes a rear cover assembled on a back side of the electronic device, and the rear cover uses the glass structural member or the housing assembly. In still other implementations of this application, the electronic device further includes a camera assembly located inside the housing. The housing includes a camera protection cover. The camera protection cover covers the camera assembly. The camera protection cover uses the glass structural member or the housing assembly. One or more of the display cover, the rear cover, and the camera protection cover of the electronic device in this application may use the foregoing glass structural member or housing assembly.

Because the foregoing glass structural member or the housing assembly has good abrasion resistance, scratch resistance, and anti-fingerprint effect, the housing of the electronic device using the glass structural member or the housing assembly has a long service life, good appearance retention, and low susceptibility to smudge, thereby improving market competitiveness of the electronic device.

### BRIEF DESCRIPTION OF DRAWINGS

FIG. 1 is a diagram of a front side structure of an electronic device according to an embodiment of this application;
FIG. 2 is a diagram of a back side structure of an electronic device according to an embodiment of this application;
FIG. 3 is a flowchart of preparation of a glass structural member according to an embodiment of this application;
FIG. 4 is a diagram of a structure of the glass structural member according to an embodiment of this application;
FIG. 5 shows pictures of surface states of glass structural members in Example 1 and Comparative example 1 under different loads of a metal pen with Mohs hardness of 6; and
FIG. 6 summarizes FTIR spectra of glass structural members that include a same SiO₂ layer and a same AF film and that are prepared from to-be-coated glass substrates with different water drop contact angles by using a same coating process, where a wave number corresponding to a dashed line is an infrared absorption peak of a Si-CH₂ bond.

### DESCRIPTION OF EMBODIMENTS

The following describes embodiments of this application with reference to accompanying drawings in embodiments of this application.

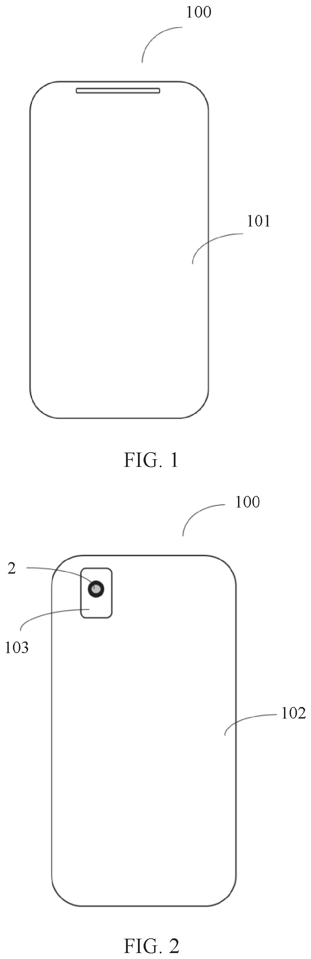

Referring to FIG. 1 and FIG. 2, an embodiment of this application provides an electronic device 100. The electronic device 100 may be a mobile phone, or may be an electronic product such as a tablet computer or an intelligent wearable device. The electronic device 100 includes a housing assembled on an outer side of the electronic device and a circuit board located inside the housing. The housing includes a display cover 101 assembled on a front side of the electronic device 100 and a rear cover 102 assembled on a back side of the electronic device 100. The display cover 101 covers a display module. The rear cover 102 may cover only a back side (that is, a side away from the display) of the electronic device 100, or may cover both the back side and a side frame of the electronic device 100. Optionally, the rear cover 102 may cover the whole side frames around the electronic device, or may cover a part of the side frame. The display cover 101 and/or the rear cover 102 are/is made by using a glass structural member. Specifically, the display cover 101 may be completely or partially made by using the glass structural member, and the rear cover 102 may be completely or partially made by using the glass structural member.

In some implementations of this application, as shown in FIG. 2, the electronic device 100 further includes a camera assembly 2 located inside the housing. The housing may include a camera protection cover 103. The camera protection cover 103 covers the camera assembly 2, and is configured to protect the camera assembly 2. The camera protection cover 103 is made by using the glass structural member. Similarly, the camera protection cover 103 may be partially or completely made by using the glass structural member. In an implementation of this application, a disposing position of the camera protection cover 103 is determined based on a disposing position of the camera assembly 2. The camera protection cover 103 may be located on the front side of the electronic device 100, or may be located on the back side of the electronic device 100. In some implementations of this application, the camera protection cover 103 and the display cover 101 or the rear cover 102 may be of a separated structure. In other implementations of this application, the camera protection cover 103 and the display cover 101 or the rear cover 102 may alternatively be of an integrated structure.

In an implementation of this application, any one, or two, or three of the display cover 101, the rear cover 102, and the camera protection cover 103 in the electronic device 100 may use the glass structural member.

The forgoing glass structural member used in the electronic device 100 may be a glass structural member prepared by using a method provided in this embodiment of this application. The following describes the glass structural member and the method for preparing the same provided in embodiments of this application.

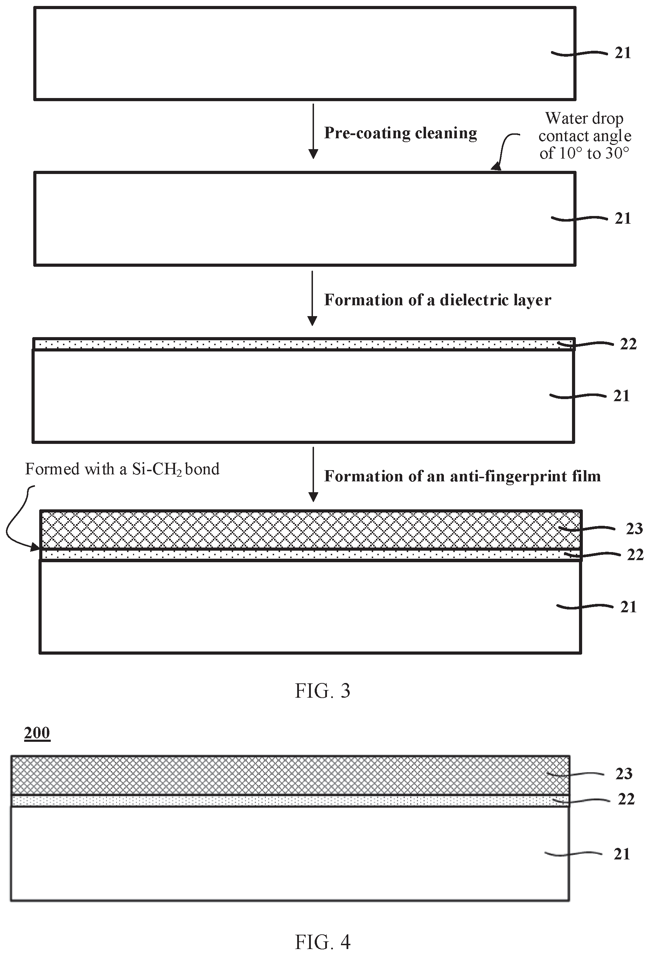

Specifically, an embodiment of this application provides a method for preparing a glass structural member, including the following steps S01, S02, and S03. FIG. 3 shows a flowchart of preparation of a glass structural member according to this embodiment of this application.

Step S01: Referring to FIG. 3, perform, on a glass substrate 21, pre-coating cleaning selected from at least one of alkali cleaning, acid cleaning, and plasma treatment, such that a water drop contact angle of a surface of the glass substrate 21 is within a range of 10° to 30°.

Step S02: Form a dielectric layer 22 including a silicon dioxide layer (namely, SiO₂ layer) on a surface of one side of the glass substrate 21 that has undergone the pre-coating cleaning.

Step S03: Form an anti-fingerprint film 23 on the silicon dioxide layer to obtain the glass structural member, where a Si-CH₂ bond is formed between the silicon dioxide layer and the anti-fingerprint film 23.

In the foregoing method for preparing a glass structural member, after the glass substrate is controlled to have undergone the pre-coating cleaning to reach a specific surface state that "a water drop contact angle of a surface of the glass substrate is within a range of 10° to 30°", coating of the dielectric layer including SiO₂ and coating of the anti-fingerprint film are performed. In this way, the binding force between the SiO₂ layer formed on such glass substrate and the glass substrate can be strong, and the thickness of the SiO₂ layer can be large. Thus, the Si-CH₂ bond can be formed between the anti-fingerprint film formed on the SiO₂ layer and the SiO₂ layer, and the binding force between the two layers can be strong. Moreover, the thickness of the anti-fingerprint film can be large. Therefore, the coat on the prepared glass structural member has a stable structure, good abrasion resistance and scratch resistance, and can have a lasting anti-fingerprint effect. In addition, the thickness of the formed SiO₂ layer is large, so that alkaline sweat resistance of the glass structural member can be improved, and a probability that the film falls off can be reduced.

Therefore, the method for preparing a glass structural member provided in this application is simple in process, convenient to operate, and low in manufacturing costs, and can be used to prepare a glass structural member that has good abrasion resistance, scratch resistance, and a lasting anti-fingerprint effect, to better meet the application requirements in the fields such as electronic devices.

In step S01, the pre-coating cleaning is performed at least on the surface of one side of the to-be-formed dielectric layer 22 of the glass substrate 21, for example, may be performed only on the surface of one side of the to-be-formed dielectric layer 22 of the glass substrate 21, or may be performed on all exposed surfaces of the glass substrate 21. In addition, the pre-coating cleaning can not only achieve the effect that "a water drop contact angle of a surface of the glass substrate 21 is within a range of 10° to 30°", but also remove smudge on the surface of the glass substrate. In some implementations of this application, before or after performing, on the glass substrate 21, pre-coating cleaning selected from at least one of alkali cleaning, acid cleaning, and plasma treatment, the glass substrate may be wiped with alcohol, to remove smudge on the surface of the glass substrate before or after the pre-coating cleaning.

In an implementation of this application, a pH of an alkali solution used for the alkali cleaning ranges from 9 to 11. A solute in the alkali solution may include one or more of sodium metasilicate, NaOH, Na₂CO₃, and NaHCO₃. Specifically, the pH of the alkali solution may be 9.2, 9.5, 9.8, 10.0, 10.2, 10.5, 10.8, or the like. In an implementation of this application, a temperature of the alkali cleaning is within a range of 20°C to 95°C, for example, specifically 25°C, 30°C, 40°C, 45°C, 50°C, 55°C, 60°C, 65°C, 70°C, 75°C, 80°C, 85°C, or 90°C. In some implementations, the temperature of the alkali cleaning is within 20°C to 60°C. The alkali cleaning at a proper temperature can ensure good alkali cleaning efficiency and a good cleaning effect, and high feasibility of mass production in industry. In addition, time of the alkali cleaning may be adjusted according to a surface area of the to-be-treated glass substrate 21. For example, the time of the alkali cleaning may be 120s to 600s, for example, specifically 150s, 180s, 210s, 240s, 270s, 300s, 360s, 420s, 480s, or 540s. If the pre-coating cleaning is alkali cleaning, parameters including the pH value/concentration of the alkali solution, the temperature of alkali cleaning, and the time of alkali cleaning can be adjusted to achieve the effect that "the water drop contact angle of the surface of the glass substrate that has undergone the alkali cleaning is within a range of 10° to 30°".

In addition, the alkali solution is applied by soaking or spraying. If the alkali solution is applied by soaking, after the alkali cleaning, all the exposed surfaces of the glass substrate 21 reach the surface state that the water drop contact angle is 10° to 30°. If the alkali solution is applied by spraying, after the alkali cleaning, only the surface on the side of the glass substrate 21 on which the alkali solution is sprayed reaches the surface state that the water drop contact angle is 10° to 30°.

In an implementation of this application, a pH of an acid solution used for the acid cleaning ranges from 2 to 4, and a solute in the acid solution includes one or more of sulfuric acid (H₂SO₄), hydrochloric acid (HCl), nitric acid (HNO₃), and oxalic acid (H₂C₂O₄), and does not include hydrofluoroic acid (HF). The acid solution does not include HF, so that the acid solution does not etch the component SiO₂ in the glass substrate and thus surface roughness of the glass substrate is not significantly reduced and scratch resistance does not deteriorate. Controlling the pH of the acid solution within a proper range can ensure that the acid solution can effectively clean the surface of the glass substrate without significantly reducing the surface roughness of the glass substrate.

In an implementation of this application, a temperature of the acid cleaning is within a range of 20°C to 95°C, for example, specifically 25°C, 30°C, 40°C, 45°C, 50°C, 55°C, 60°C, 65°C, 70°C, 75°C, 80°C, 85°C, or 90°C. In some implementations, the temperature of the acid cleaning is within 20°C to 60°C. The acid cleaning at a proper temperature can ensure good acid cleaning efficiency and a good cleaning effect, and high controllability of the acid cleaning. In addition, the time of the acid cleaning can be adjusted according to the surface area of the to-be-treated glass substrate 21. For example, the time of the acid cleaning may be 120s to 600s, for example, specifically 150s, 180s, 240s, 270s, 300s, 330s, 360s, 390s, 420s, 450s, 480s, 540s, or 570s. In some implementations, the time of the acid cleaning is 300s to 600s. Similarly, if the pre-coating cleaning is the acid cleaning, parameters including the pH value/concentration of the acid solution, the temperature of the acid cleaning, and the time of the acid cleaning can be adjusted to achieve the effect that "the water drop contact angle of the surface of the glass substrate that has undergone the acid cleaning is within a range of 10° to 30°".

In an implementation of this application, if the pre-coating cleaning includes plasma treatment, a device used for the plasma treatment may include one or more of a box type, a flame type, and a glow type. A power of the plasma treatment may be within a range of 500 W to 1500 W, and treatment time may be within a range of 30s to 1200s. By controlling the power and time of the plasma treatment within proper ranges, sufficient cleaning intensity can be achieved, so as to achieve the desired surface treatment effect. In addition, the surface of the glass substrate is not excessively damaged due to excessively high power of the plasma treatment or excessively long treatment time and thus the scratch resistance and rubbing resistance of the glass substrate do not deteriorate.

In some implementations of this application, plasma used for the plasma treatment is nitrogen (N₂) plasma. The pre-coating cleaning with the N₂ plasma can avoid oxidation reaction on the surface of the glass substrate and prevent the structure of the surface of the glass substrate from being excessively damaged, so that the effect that a target water drop contact angle is within a range of 10° to 30° can be easily achieved, and abrasion resistance of the glass product can be improved in the later period.

In this application, the pre-coating cleaning may be merely alkali cleaning, acid cleaning, or plasma treatment, or may be two or three of them. For example, in some implementations, the pre-coating cleaning is alkali cleaning and acid cleaning. In this case, acid cleaning may be performed before alkali cleaning. In some other implementations, the pre-coating cleaning is first plasma treatment and then alkali cleaning.

In step S01 of this application, the glass substrate 21 undergoes pre-coating cleaning, so that the water drop contact angle on the surface of the glass substrate may be specifically 11°, 12°, 13°, 14°, 15°, 16°, 17°, 18°, 19°, 20°, 21°, 22°, 23°, 24°, 25°, 26°, 27°, 28°, 29°, or the like.

In an implementation of this application, both the dielectric layer 22 in step S02 and the anti-fingerprint film 23 in step S03 may be formed by vacuum coating. Coating may be performed on both the dielectric layer 22 and the anti-fingerprint film 23 in a deposition cavity in a coating device (for example, a thermal evaporator or a sputtering machine). Generally, the deposition cavity of the coating device is first vacuumized to a predetermined vacuum degree, and then thermal evaporation or sputtering of the raw material is started, so as to start coating. The vacuumization may be completed within 5 minutes to 30 minutes.

In an implementation of this application, during the coating of the dielectric layer 22, a vacuum degree is ≤5×10⁻³ Pa, and a coating rate is ≤2 nm/min. During the coating, a shielding gas is argon or nitrogen. During the coating of the anti-fingerprint film 23, a vacuum degree is ≤5×10⁻³Pa, and a coating rate is ≤10 nm/min. During the coating, a shielding gas is argon or nitrogen. The low vacuum degree can ensure purity of the coat, and the proper coating rate can ensure uniform thickness and good structural integrity of the coat. By adjusting the foregoing coating parameters, coating time, and the like, the dielectric layer 22 and the anti-fingerprint film 23 with different thicknesses and different compactness can be formed. In some embodiments of this application, the vacuum degrees during the coating of the dielectric layer 22 and the anti-fingerprint film 23 are both 1× 10⁻³ Pa.

In some implementations of this application, in step S02, plasma cleaning may be further performed during the formation of the dielectric layer 22 or after the formation of the dielectric layer 22. The plasma cleaning can help construct a surface that is of the dielectric layer and that is suitable for binding to the anti-fingerprint film 23. The plasma cleaning is performed in the coating device, specifically in the deposition cavity of the coating device. Therefore, the plasma cleaning may also be referred to as "in-cavity plasma cleaning". Generally, the plasma cleaning is performed after a predetermined vacuum degree is reached in the deposition cavity of the coating device. For example, when the vacuum degree in the deposition cavity of the coating device is ≤5×10⁻³ Pa, an ion source is turned on, and the inert gas is introduced. In this implementation of this application, the plasma used for the plasma cleaning is Ar plasma. Cleaning with the Ar plasma can ensure that the surface that is of the dielectric layer and that is suitable for binding to the anti-fingerprint film 23 is constructed without affecting the purity of the dielectric layer 22.

In some embodiments of this application, after the coating of the dielectric layer 22 is completed, plasma cleaning is performed in the deposition cavity of the coating device. Specifically, after the coating of the dielectric layer 22 is completed and a predetermined vacuum degree is reached in the deposition cavity of the coating device, the ion source is turned on, and the inert gas (for example, Ar) is introduced, so as to generate inert gas plasma for cleaning. After the dielectric layer 22 is formed, plasma cleaning is performed on the surface of the dielectric layer 22, which can not only remove stains, but also ensure that the surface of the dielectric layer has sufficient activity, thereby helping improve the binding force between the anti-fingerprint film 23 subsequently formed and the dielectric layer. When the vacuum degree in the deposition cavity of the coating device is ≤5×10⁻³ Pa, the ion source is turned on, and the inert gas is introduced, so that plasma cleaning is performed on the surface of the dielectric layer by using the inert gas. A voltage and/or a current of the ion source, an air pressure in the cavity during plasma cleaning, a flow rate of the inert gas, time used for the plasma cleaning, and the like may be adjusted to control a plasma cleaning effect. In some implementations of this application, during the plasma cleaning, the voltage of the ion source is 50 V to 100 V, the flow rate of the Ar is 50 sccm to 300 sccm, the air pressure in the cavity is 1×10⁻² Pa to 5×10⁻¹ Pa, and the time used for the plasma cleaning may be 10 minutes to 30 minutes.

In some other embodiments of this application, after a predetermined vacuum degree is reached in the deposition cavity of the coating device, when the coating of the dielectric layer 22 starts or after the coating of the dielectric layer 22 starts for a period of time, the ion source is turned on, and an inert gas is introduced to generate inert gas plasma. This can also ensure a good binding force between the surface of the deposited dielectric layer and the anti-fingerprint film 233.

In some implementations of this application, in step S02, the formed dielectric layer 22 is a SiO₂ layer alone. In some other implementations of this application, the dielectric layer 22 includes a SiO₂ layer and another dielectric layer that are stacked. The another dielectric layer is disposed close to the glass substrate 21. The SiO₂ layer is disposed close to the anti-fingerprint film 23. That is, on the glass substrate 21 that has undergone the pre-coating cleaning in step S01, the another dielectric layer is first formed, and then the SiO₂ layer is formed. In an implementation of this application, the another dielectric layer includes a silicon carbide (SiC) layer or an aluminum oxide (Al₂O₃) layer. Introducing the SiC layer or the Al₂O₃ layer can improve hardness of the finally prepared glass structural member, and help improve scratch resistance of the glass structural member. In an implementation of this application, a thickness of the silicon carbide layer or the aluminum oxide layer is less than 3 nm. This can prevent an excessively thick SiC layer or Al₂O₃ layer from reducing the binding force between the SiO₂ layer formed on the SiC layer or the Al₂O₃ layer and the glass substrate.

In an implementation of this application, in step S02, a thickness of the formed SiO₂ layer may be 16 nm or greater. Before the dielectric layer is formed on the glass substrate, the glass substrate that has undergone pre-coating cleaning is first enabled to achieve the specific surface state that the water drop contact angle is 10° to 30°. Therefore, the SiO₂ layer formed on the glass substrate has a large binding force to the glass substrate, and the SiO₂ layer can have a large thickness and is still not easy to fall off. This helps improve abrasion resistance and scratch resistance of the prepared glass structural member, and can also improve alkaline sweat resistance of the glass structural member.

In some implementations of this application, the thickness of the SiO₂ layer may be 18 nm or greater, 20 nm or greater, 22 nm or greater, 25 nm or greater, 30 nm or greater, 40 nm or greater, or the like. The thickness of the SiO₂ layer is large, which helps improve abrasion resistance and scratch resistance of the prepared glass structural member and further helps improve alkaline sweat resistance of the prepared glass structural member. In some embodiments, the thickness of the SiO₂ layer may be within a range of 18 nm to 50 nm. The thickness of the SiO₂ layer is within this range, so that the prepared glass structural member can have good abrasion resistance, scratch resistance, and alkaline sweat resistance, and the SiO₂ layer does not easily fall off from the glass substrate 21. The anti-fingerprint film disposed on the SiO₂ layer may have a large thickness and good anti-fingerprint durability. Further, the thickness of the SiO₂ layer may be within a range of 18 nm to 25 nm.

In an implementation of this application, a sum of the thickness of the dielectric layer 22 and the thickness of the anti-fingerprint film 23 may be 70 nm or greater. During preparation of the glass structural member, the glass substrate that has undergone pre-coating cleaning is first enabled to achieve the specific surface state that the water drop contact angle is 10° to 30°, so that the thickness of the SiO₂ layer and the thickness of the AF film formed on the glass substrate are large, and the sum of the thickness of the SiO₂ layer and the thickness of the AF film is also large, which helps the prepared glass structural member have abrasion resistance, scratch resistance, and an anti-fingerprint effect. In some implementations of this application, a sum of a thickness of the dielectric layer 22 and a thickness of the anti-fingerprint film 23 is within a range of 70 nm to 150 nm, for example, specifically 75 nm, 80 nm, 90 nm, 100 nm, 110 nm, 112 nm, 115 nm, 118 nm, 120 nm, 125 nm, 130 nm, 135 nm, 140 nm, or 145 nm. This can better ensure that the stacked structure of the dielectric layer 22 and the anti-fingerprint film 23 does not easily fall off from the glass substrate and does not significantly reduce transparency of the original glass substrate.

In an implementation of this application, in step S03, a constituent of the anti-fingerprint film 23 includes a perfluoroalkyl compound or a polyfluoroalkyl compound containing a -CH₂- structure. The compound with the fluorine-containing group can have good hydrophobicity and oleophobicity, and endow the coat containing the compound with a good anti-fingerprint effect. In addition, the compound with the fluorine-containing group further includes the -CH₂- structure, which can ensure that the Si-CH₂ bond can be formed between the compound with the fluorine-containing group and the SiO₂ layer formed on the surface of the glass substrate that has undergone pre-coating cleaning.

In an implementation of this application, in step S03, the thickness of the anti-fingerprint film 23 is 50 nm or greater, and may further be 60 nm or greater. As described above in this application, because the Si-CH₂ bond is formed between the anti-fingerprint film 23 and the SiO₂ layer, the anti-fingerprint film 23 may have a large thickness and still does not easily fall off. In some embodiments of this application, the thickness of the anti-fingerprint film 23 may be within a range of 60 nm to 100 nm. The AF film with an appropriate thickness not only enables the prepared glass structural member to have good anti-fingerprint durability and abrasion resistance, but also does not significantly affect transparency of the original glass substrate. For example, the thickness of the anti-fingerprint film 23 may be specifically 60 nm, 65 nm, 70 nm, 75 nm, 80 nm, 85 nm, 90 nm, 95 nm, 100 nm, or the like.

In some implementations of this application, after the formation of the anti-fingerprint film 23, the method may further include: cleaning the obtained glass structural member, to ensure cleanliness of the glass structural member.

In step S03, "a Si-CH₂ bond is formed between the SiO₂ layer and the anti-fingerprint film 23" may be learned by performing a Fourier infrared spectrum (Fourier Transform Infrared Spectroscopy, FTIR for short) test on the prepared glass structural member. Specifically, the formation of the Si-CH₂ bond between the SiO₂ layer and the anti-fingerprint film 23 can be obtained through an infrared characteristic absorption peak at a wave number of 600 cm⁻¹ to 700 cm⁻¹ in the obtained FTIR spectrum.

An embodiment of this application further provides a glass structural member. A schematic structural view of the glass structural member may be shown in FIG. 4. The glass structural member 200 includes a glass substrate 21, and a dielectric layer 22 and an anti-fingerprint film 23 (namely, an AF film 23) that are sequentially stacked on one side of the glass substrate 21. The dielectric layer 22 includes a silicon dioxide layer (namely, a SiO₂ layer) disposed close to one side of the anti-fingerprint film 23. A constituent of the anti-fingerprint film 23 includes a -CH₂- structure. A Si-CH₂ bond is formed between the SiO₂ layer and the anti-fingerprint film 23.

In the glass structural member 200 provided in this application, the Si-CH₂ bond is formed between the SiO₂ layer and the anti-fingerprint film 23, so that a binding force between the anti-fingerprint film 23 and the SiO₂ layer that functions as a base can be significantly improved. Therefore, the thickness of the anti-fingerprint film 23 can be made large, which ensures that the glass structural member 200 has a lasting anti-fingerprint effect and is also conducive to improvement of abrasion resistance of the glass structural member. In addition, according to the foregoing method for preparing a glass structural member in this application, the Si-CH₂ bond is formed between the SiO₂ layer and the anti-fingerprint film 23, which may also indicate a strong binding force between the SiO₂ layer and the glass substrate. The thickness of the SiO₂ layer can be large, so that abrasion resistance and scratch resistance of the glass structural member 200 can be improved.

However, in the existing glass structural member, no Si-CH₂ bond is formed between the SiO₂ layer and the anti-fingerprint film (AF film), the thickness of the SiO₂ layer disposed on the glass substrate is usually less than 10 nm, the thickness of the AF film is also small, and abrasion resistance and scratch resistance are not good. A glass structural member that includes a glass substrate, a super-hard coat (such as a diamond-like coat), and an AF film that are stacked is also prepared in the industry to improve the scratch resistance. However, the super-hard coat usually causes a sharp increase in costs of the glass structural member, reduces an anti-fingerprint life of the glass structural member, and has a limited application scope. Therefore, it can be learned from the foregoing analysis that, the glass structural member 200 provided in this application can have excellent abrasion resistance, excellent scratch resistance and a lasting anti-fingerprint effect, and has low manufacturing costs.

For parameters such as the thickness of the SiO₂ layer, the thickness of the anti-fingerprint film 23, and the sum of the thickness of the SiO₂ layer and the thickness of the anti-fingerprint film 23, reference may be made to the foregoing descriptions in this application.

As described above in this application, in some implementations of this application, the dielectric layer 22 is the SiO₂ layer. In some other implementations of this application, in addition to the SiO₂ layer disposed close to the anti-fingerprint film 23, the dielectric layer 22 further includes a SiC layer or an Al₂O₃ layer disposed close to the glass substrate 21. That is, the SiO₂ layer is disposed on a side of the SiC layer or the Al₂O₃ layer away from the glass substrate 21. Introducing the SiC layer or the Al₂O₃ layer can improve hardness of the glass structural member 200, and help improve scratch resistance of the glass structural member 200. Further, a thickness of the SiC layer or the Al₂O₃ layer is less than 3 nm. This can prevent an excessively thick SiC layer or Al₂O₃ layer from reducing the binding force between the SiO₂ layer formed on the SiC layer or the Al₂O₃ layer and the glass substrate, and can reduce the thickness of the SiO₂ layer.

In this implementation of this application, in the glass structural member 200, an exposed surface of the anti-fingerprint film 23 has an initial water drop contact angle of 110° or greater and a water drop contact angle of greater than 100° after being rubbed by an eraser 13000 times.

The large initial water drop contact angle of the glass structural member 200 can indicate that the surface on which the AF film is disposed has excellent anti-fouling performance. The abrasion resistance of the film disposed on the glass substrate 21 can be characterized by time to failure (Time to Failure, TTF for short) of eraser rubbing when the water drop contact angle is greater than 100°. In general, the water drop contact angle of the surface of a glass sample decreases gradually after the eraser rubbing test. The surface of the glass structural member 200 on which the AF film is disposed in this application still has a water drop contact angle of greater than 100° after being rubbed by an eraser 13000 times (that is, a TTF of eraser rubbing of the surface is ≥13000), indicating that the surface has good abrasion resistance and a good anti-fingerprint smudge capability. However, for a glass structural member with a SiO₂ layer and an AF film in the conventional technologies, the time to failure of eraser rubbing is generally rarely greater than 4000. In other words, the existing glass structural member has a water drop contact angle of less than 100° after being rubbed by an eraser 4000 times. In this application, the eraser rubbing test is to perform a rubbing test on the surface of the glass structural member at a speed of 40 turns/min by using an eraser under 1 kg load, with a single stroke of 40 mm.

In some implementations of this application, the glass structural member 200 still has a water drop contact angle of greater than 100° after being rubbed with an eraser 14000 times. That is, the TTF of eraser rubbing of the glass structural member 200 is ≥14000. Further, the TTF of eraser rubbing of the glass structural member 200 is ≥18000. In some examples, the TTF of eraser rubbing of the glass structural member 200 is ≥20000.

In an implementation of this application, a load threshold for generating a scratch on the glass structural member 200 under Mohs hardness of 6 is 750 g or greater. The scratch resistance of the film disposed on the glass substrate may be characterized by Mohs hardness. A scratch test is performed on the surface (which is specifically the surface on which the AF film is disposed) of a glass structural member sample under different loads by using a metal pen with Mohs hardness of 6. Whether the sample has a scratch is observed under an optical microscope, and a load value corresponding to the occurrence of the scratch on the surface of the sample (that is, the load threshold for generating a scratch) is recorded. In this embodiment of this application, the load threshold for generating a scratch on the glass structural member 200 by using a metal pen with Mohs hardness of 6 is high, which can indicate good scratch resistance of the glass structural member 200. In some implementations of this application, the load threshold for generating a scratch on the glass structural member 200 at Mohs hardness of 6 may be 800 g or greater, or 1000 g or greater, or 1200 g or greater, or even 1400 g or greater, or the like.

In an implementation of this application, after the glass structural member 200 soaked in simulated alkaline sweat with pH=9.5 is stored in a 70°C thermotank for 24 hours, no film falls off. This can indicate that the films (the dielectric layer 22 and the anti-fingerprint film 23) of the glass structural member 200 provided in this application are reliable and have good alkaline sweat resistance, and in particular, can indicate that the film structure of the dielectric layer 22 including SiO₂ has good integrity and high compactness. To prevent the alkaline sweat from volatilizing when the glass structural member soaked in the simulated alkaline sweat is stored in the 70°C thermotank, the glass structural member soaked in the simulated alkaline sweat may be placed in a high-temperature-resistant and moisture-retaining bag and then placed in the 70°C thermotank, to observe whether the films fall off after 24 hours.

In some implementations of this application, the glass structural member 200 has an average transmittance of ≥88% for light with a wavelength of 400 nm to 700 nm, and a Lab chromaticity b value satisfies: |b value|≤1.2. In this application, even if the SiO₂ dielectric layer and the AF film having large thicknesses are disposed on the glass substrate 21, the obtained glass structural member 200 can still have excellent optical performance, high light transmittance, and low coloration, and is particularly suitable for the display cover 101, the camera protection cover 103, and the like that have a high transparency requirement. |b value|≤1.2 indicates that the glass structural member 200 does not turn yellow or blue, and has high transparency. In some implementations, |b value|≤1.0, and further ≤0.9, ≤0.8, ≤0.7, ≤0.5, and the like.

In an implementation of this application, the glass substrate 21 may be strengthened glass-ceramics or strengthened common glass that does not contain a crystal phase. The main difference between glass-ceramics and common glass lies in whether a crystal phase is contained. Generally, the strengthened glass-ceramics has better drop resistance than the strengthened common glass. The glass-ceramics or the common glass may have residual stress after being chemically strengthened. Specifically, a surface of the strengthened glass-ceramics or the strengthened common glass has a compressive stress layer.

In some implementations of this application, the glass substrate 21 is strengthened glass-ceramics. In molar percentage, the strengthened glass-ceramics may include the following components: Li₂O: 10% to 25%, SiO₂: 58% to 72%, Na₂O and K₂O: 3% to 7%, Al₂O₃: 2% to 8%, P₂O₅+ZrO₂+TiO₂: 2% to 13%, MgO+CaO+ZnO: 0% to 3%, and B₂O₃: 0% to 5%. The strengthened glass-ceramics that satisfies the component requirement can better combine features such as high transmittance, low coloration, high crystallinity, and high Young's modulus, so as to better meet the application requirements in the fields such as electronic devices.

In an implementation of this application, the strengthened glass-ceramics may include a glass phase and a crystal phase. The crystal phase includes at least one of quartz, spodumene, petalite, lithium silicate, lithium disilicate, and spinel. The presence of these crystal phases can help improve the drop resistance, abrasion resistance, and scratch resistance of the glass-ceramics. In some implementations of this application, the crystal phase in the strengthened glass-ceramics includes lithium silicate, lithium disilicate, and petalite at the same time. Further, a total mass content of the crystal phase in the strengthened glass-ceramics is greater than or equal to 20%. The total content of the foregoing crystal phase in the strengthened glass-ceramics is high, which is more conducive to improvement of drop resistance, abrasion resistance, and scratch resistance of the strengthened glass-ceramics.

In some implementations of this application, the glass substrate 21 is strengthened common glass, which may be typical lithium-aluminum-silicate glass. In some embodiments, in molar percentage, the strengthened common glass includes the following components: SiO₂: 45% to 59.5%, Al₂O₃: 9% to 30%, MgO: 7% to 30%, ZnO: 0% to 5%, ZrO₂: 0% to 10%, La₂O₃: 0% to 10%, Li₂O: 5.5% to 15%, Na₂O: 1% to 5%, and K₂O: 2% to 5%.

An embodiment of this application further provides a housing assembly. The housing assembly includes the glass structural member in embodiments of this application, or the glass structural member prepared by using the foregoing method in embodiments of this application.

In addition, in addition to the glass structural member 200 in embodiments of this application, the housing assembly may be further flexibly provided with another film structure based on an actual requirement for the housing assembly. For example, one or more of structures such as a UV texture layer, a color layer, a coating layer, and a bottom-covering oil layer may be further disposed on a side of the glass substrate 21 away from the anti-fingerprint film 23.

An embodiment of this application further provides an electronic device using the foregoing housing assembly or the glass structural member.

As described above in this application, at least one of the display cover 101, the rear cover 102, and the camera protection cover 103 in the electronic device 100 may use the glass structural member 200 or the housing assembly provided in embodiments of this application. In addition, when a user uses the electronic device, a finger of the user may directly contact the anti-fingerprint film 23 in the glass structural member 200.

At least one component of the housing of the electronic device 100 use the housing assembly or the glass structural member 200 having good abrasion resistance, scratch resistance, and anti-fingerprint effect provided in embodiments of this application. The housing of the electronic device has a long service life, good appearance retention, and low susceptibility to smudge, thereby improving comprehensive performance and market competitiveness of the electronic device 100.

Embodiments of this application are further described below by using a plurality of examples.

### Example 1

A method for preparing a glass structural member includes the following steps:
(1) Glass-ceramics was taken. The glass-ceramics included the following components in molar percentage: 20% of Li₂O, 60% of SiO₂, 3% of Na₂O, 1% of K₂O, 3% of Al₂O₃, 3% of P₂O₅, 6% of ZrO₂, 1% of TiO₂, 1% of MgO, 1% of CaO, and 1% of ZnO. A crystal phase in the glass-ceramics raw material included petalite and lithium disilicate. A total content of the crystal phase was 90 wt%. The glass-ceramics was chemically strengthened to obtain strengthened glass-ceramics as a to-be-used glass substrate.

Pre-coating cleaning, which was specifically alkali cleaning, was performed on the glass substrate, so that a water drop contact angle on a surface of the glass substrate reached 14°. Processing parameters of the alkali washing were that the alkali solution was an aqueous solution containing NaOH and KOH and having a pH of 10.5, a temperature of the alkali cleaning was 55°C, and time used for the alkali cleaning was 120s.
(2) A SiO₂ layer with a thickness of 18 nm was formed on a surface of one side of the glass substrate that has undergone pre-coating cleaning to serve as a dielectric layer between the glass substrate and a to-be-formed AF film. A forming process of the SiO₂ layer included: placing the glass substrate that has undergone pre-coating cleaning in a sputtering cavity of a sputtering machine, where a Si target was disposed in the sputtering cavity; setting a deposition temperature and a sputtering power of the Si target; and after the sputtering cavity was vacuumized to a vacuum degree of 1 × 10⁻³ Pa, turning on the Si target, introducing O₂, and forming the SiO₂ layer with a thickness of 18 nm on one side of the glass substrate at a coating rate of 1 nm/min. After the coating of the SiO₂ layer was completed, the vacuum degree in the sputtering cavity was controlled to be 1×10⁻³ Pa, and then an ion source was turned on while controlling a voltage of the ion source to 80 V. Argon (Ar) was introduced at a flow rate of 200 sccm, so that an air pressure in the cavity was 10⁻¹ Pa. Ar plasma cleaning was performed on the surface of the SiO₂ layer for 10 minutes.
(3) The AF film with a thickness of 100 nm was formed on the SiO₂ layer by vacuum coating. A Si-CH₂ bond was formed between the AF film and the SiO₂ layer. During the coating of the AF film, the vacuum degree was 1 × 10⁻³ Pa, and a coating rate was ≤10 nm/min. During the coating, a shielding gas was Ar.

### Example 2

A method for preparing a glass structural member in Example 2 was different from that in Example 1 in that: in step (2), a SiO₂ layer with a thickness of 25 nm was formed.

### Example 3

A method for preparing a glass structural member in Example 3 was different from that in Example 1 in that: in step (2), a SiO₂ layer with a thickness of 50 nm was formed.

### Example 4

A method for preparing a glass structural member in Example 4 was different from that in Example 1 in that: in step (2), a thickness of the SiO₂ layer formed was 16 nm, and plasma treatment was performed twice. The specific process was as follows: (1) After the sputtering cavity was vacuumized to a vacuum degree of 1× 10⁻³ Pa, the Si target was turned on, O₂ was introduced, and the SiO₂ layer with a thickness of 8 nm was formed on one side of the glass substrate at a coating rate of 1 nm/min; and (2) the ion source was turned on, a voltage of the ion source is controlled to 80 V, Ar was introduced at a flow rate of 200 sccm to serve as a shielding gas such that an air pressure in the cavity was 10⁻¹ Pa, and Ar plasma cleaning was performed on the surface of the SiO₂ layer for 10 minutes. Then, the SiO₂ layer with a thickness of 8 nm was grown according to step (1), and Ar plasma cleaning and the like was performed on the SiO₂ layer according to step (1).

### Example 5

A method for preparing a glass structural member in Example 5 was different from that in Example 4 in that: in step (3), an AF film with a thickness of 60 nm was formed.

### Comparative example 1

A method for preparing a glass structural member was different from that in Example 1 in that: the pre-coating cleaning process was different and the thickness of the SiO₂ layer was different.

Specifically, the preparation of a glass structural member in Comparative example 1 included the following steps:
(1) Pre-coating cleaning was performed on a glass substrate which was the same as that in Example 1, so that a water drop contact angle on a surface of the glass substrate reached 36°. The pre-coating cleaning was neutral cleaning. The processing parameters of the neutral cleaning were that the neutral cleaning solution was an aqueous solution with a pH of 7, a temperature of the cleaning was 55°C, and time used for the cleaning was 400s.
(2) Similar to the method in Example 1, a SiO₂ layer with a thickness of 10 nm was formed on a surface of one side of the glass substrate that has undergone the pre-coating cleaning.
(3) Similar to the method in Example 1, an AF film with a thickness of 50 nm was formed on the SiO₂ layer by vacuum coating.

### Comparative example 2

Preparation of a glass structural member was different from that in Example 1 in that: (1) The pre-coating cleaning process was different: pre-coating cleaning, which was specifically alkali cleaning, was performed on the glass substrate which was the same as that in Example 1, so that a water drop contact angle on a surface of the glass substrate reached 8°. The processing parameters of the alkali cleaning were that the alkali solution was an aqueous solution containing NaOH and having pH=11.5, a temperature of the alkali cleaning was 55°C, and time used for the alkali cleaning was 600s. (2) In Comparative example 2, a thickness of the SiO₂ layer was 10 nm, and a thickness of the AF film was 50 nm.

An eraser rubbing test, a 24-hour alkaline sweat resistance test, and a Mohs hardness scratch resistance test were performed on the glass structural members prepared in Examples 1 to 5 and Comparative examples 1 to 2. Results are summarized in Table 1.

The eraser rubbing test was to rub the surface (on which the AF film was disposed) of the glass structural member at a speed of 40 turns/min by using an eraser under 1 kg load, with a single stroke of 40 mm, and time to failure (Time to Failure, TTF for short) of eraser rubbing of the surface of the AF film when the water drop contact angle was greater than 100° was recorded. That is, after the times of eraser rubbing exceeds the time to failure, the water drop contact angle on the surface of the AF film was less than 100°.

In the 24-hour alkaline sweat resistance test, the glass structural members that had been soaked in simulated alkaline sweat with pH=9.5 were each placed in a high-temperature-resistant and moisture-retaining bag and then placed in a 70°C thermotank. Whether the films fell off after observation for 24 hours. If no film fell off, the glass structural member passed the test.

In the Mohs hardness scratch resistance test, a scratch test was performed on the surface (on which the AF film was disposed) of each of the glass structural member samples under different loads by using a metal pen with Mohs hardness of 6. Whether the samples had a scratch was observed under an optical microscope, and a load value corresponding to the occurrence of the scratch on the surface of each sample (that is, the load threshold for generating a scratch) was recorded.

**Table 1**

| | Pre-coating cleaning | | | | Coating process | | | Test result | | |
|---|---|---|---|---|---|---|---|---|---|---|
| | pH | Time | Temperature | Water drop contact angle | Thickness of a SiO₂ layer | Thickness of an AF film | Times of plasma treatment | TTF of eraser rubbing | 24-hour alkaline sweat resistance | Mohs hardness limit load |
| Example 1 | 10.5 | 120s | 55°C | 14° | 18 nm | 100 nm | 1 | 25000 | Passed | 6 g to 1400 g |
| Example 2 | 10.5 | 120s | 55°C | 14° | 25 nm | 100 nm | 1 | 33000 | Passed | 6 g to 1400 g |
| Example 3 | 10.5 | 120s | 55°C | 14° | 50 nm | 100 nm | 1 | 22000 | Passed | 6 g to 1400 g |
| Example 4 | 10.5 | 120s | 55°C | 14° | 16 nm | 100 nm | 2 | 23000 | Passed | 6 g to 750 g |
| Example 5 | 10.5 | 120s | 55°C | 14° | 16 nm | 60 nm | 2 | 18000 | Passed | 6 g to 750 g |
| Comparative example 1 | 7 | 400s | 55°C | 36° | 10 nm | 50 nm | 1 | 4000 | Passed | 6 g to 500 g |
| Comparative example 2 | 11.5 | 600s | 55°C | 8° | 10 nm | 50 nm | 1 | 5000 | Failed | 6 g to 500 g |

As can be seen from Table 1, after the glass substrate in Comparative example 1 underwent pre-coating cleaning, the water drop contact angle on the surface of the glass substrate was 36°, which is not within the range of 10° to 30° required in this application. Although the glass structural member prepared after the SiO₂ layer and the AF film were formed thereon could pass the 24-hour alkaline sweat resistance test, the glass structural member had low time to failure of eraser rubbing, indicating that the glass structural member had poor abrasion resistance. The load threshold for generating a scratch on the surface by using a metal pen with Mohs hardness of 6 was only 500 g, indicating poor scratch resistance. However, in Examples 1 to 5, after the surface of the glass substrate was treated to the same water drop contact angle of 14° through the same pre-coating cleaning process, the glass structural members with different thicknesses of the SiO₂ layer and the AF film were prepared. The thickness of the SiO₂ layer could be 16 nm or greater, and the thickness of the AF film could be 100 nm or greater. In addition, all the glass structural members in Examples 1 to 5 could pass the 24-hour alkaline sweat resistance test. Moreover, both abrasion resistance and scratch resistance were improved, the time to failure of eraser rubbing was at least 3.5 times higher than that of Comparative example 1, and the load threshold for generating a scratch on the surface was at least 3.5 times higher than that of Comparative example 1. Abrasion resistance and scratch resistance of the glass structural member in Example 1 were improved more significantly compared with those in Comparative example 1.

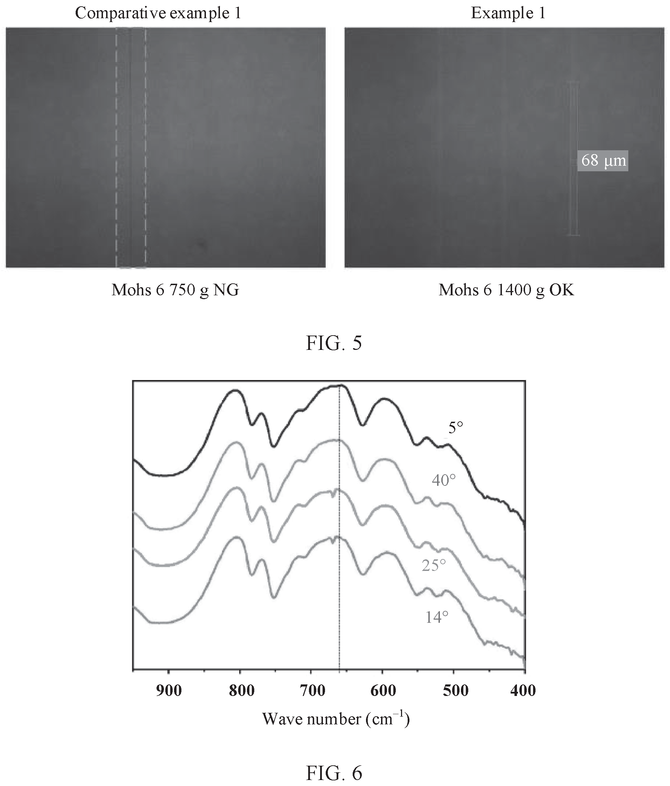

FIG. 5 further shows pictures of surface states of the glass structural members in Example 1 and Comparative example 1 under different loads of a metal pen with Mohs hardness of 6. As can be seen from FIG. 5, for the glass structural member in Comparative example 1, under the effect of a metal pen with Mohs hardness of 6 under a load of 750 g, an obvious scratch (in the white dashed box) occurred on the surface of the glass structural member, indicating that the load threshold for generating a scratch on the surface of the glass structural member was less than 750 g. However, for the glass structural member in Example 1, when the load of the metal pen with Mohs hardness of 6 reached 1,400 g, there was basically no obvious scratch on the surface of the glass structural member (it should be noted that the rectangular box in the right image of FIG. 5 shows one area in which the metal pen rubbed).

In addition, the water drop contact angle of the surface of the glass substrate in Comparative example 2 after pre-coating cleaning was 8°, which is lower than the lower limit of 10° required in this application. The glass structural member obtained after the SiO₂ layer and the AF film were formed thereon had poor abrasion resistance and scratch resistance, and could not pass the 24-hour alkaline sweat resistance test. This may be because the glass substrate in Comparative example 2 became excessively rough after pre-coating cleaning, and the SiO₂ layer formed thereon was not enough to cover the surface completely.

To explore the impact of water drop contact angle states achieved by different pre-coating processes on structural characteristics, performance, and the like of the coats of a finally prepared glass product, this application further provides Examples 6 to 10 and Comparative examples 3 to 4.

### Example 6

Preparation of a glass structural member was different from that in Example 1 in that: (1) The pre-coating cleaning process was different: pre-coating cleaning, which was specifically alkali cleaning, was performed on the glass substrate which was the same as that in Example 1, so that a water drop contact angle on a surface of the glass substrate reached 20°. The processing parameters of the alkali cleaning were that the alkali solution was an aqueous solution containing NaOH and having pH=13, a temperature of the alkali cleaning was 55°C, and time used for the alkali cleaning was 120s. (2) A thickness of the SiO₂ layer was different, specifically 20 nm. (3) A thickness of the AF film was different, specifically 60 nm.

### Example 7

Preparation of a glass structural member was different from that in Example 1 in that: (1) The pre-coating cleaning process was different: pre-coating cleaning, which was specifically acid cleaning, was performed on the glass substrate which was the same as that in Example 1, so that a water drop contact angle on a surface of the glass substrate reached 13°. The processing parameters of the acid cleaning were that the acid solution was an aqueous solution containing dilute sulfuric acid and having pH=2.3, a temperature of the acid cleaning was 20°C, and time used for the acid cleaning was 300s. (2) A thickness of the AF film was different, specifically 80 nm.

### Example 8

Preparation of a glass structural member was different from that in Example 1 in that: The pre-coating cleaning was different: pre-coating cleaning was performed on a glass substrate which was the same as that in Example 1, so that a water drop contact angle on a surface of the glass substrate reached 10°. The pre-coating cleaning included acid cleaning and then alkali cleaning. The processing parameters of the acid cleaning were the same as those in Example 3. The processing parameters of the alkali cleaning were the same as those in Example 1.

### Example 9

Preparation of a glass structural member was different from that in Example 1 in that: The pre-coating cleaning process was different: pre-coating cleaning was performed on a glass substrate which was the same as that in Example 1, so that a water drop contact angle on a surface of the glass substrate reached 22°. The pre-coating cleaning included box-type plasma cleaning and then alkali cleaning. A power of the box-type plasma cleaning was 800 W, and time used for the cleaning was 180s. The processing parameters of the alkali cleaning were the same as those in Example 1.

### Example 10

Preparation of a glass structural member was different from that in Example 1 in that: The pre-coating cleaning process was different: pre-coating cleaning was performed on a glass substrate which was the same as that in Example 1, so that a water drop contact angle on a surface of the glass substrate reached 25°. The pre-coating cleaning included flame-type plasma cleaning and then alkali cleaning. A power of the flame-type plasma cleaning was 800 W, and time used for the cleaning was 120s. The processing parameters of the alkali cleaning were the same as those in Example 1.

### Comparative example 3

Preparation of a glass structural member was different from that in Example 1 in that: (1) The pre-coating cleaning process was different: pre-coating cleaning was performed on a glass substrate which was the same as that in Example 1, so that a water drop contact angle on a surface of the glass substrate reached 5°. The pre-coating cleaning included acid cleaning and then alkali cleaning. The processing parameters of the acid cleaning were that the acid solution was an aqueous solution containing dilute sulfuric acid and having pH=2.0, and the acid cleaning was performed at a temperature of 20°C for 600s. The processing parameters of the alkali cleaning were the same as those in Example 1. (2) In Comparative example 3, a thickness of the SiO₂ layer was 8 nm, and a thickness of the AF film was 12 nm.

### Comparative example 4

Preparation of a glass structural member was different from that in Example 1 in that: (1) The pre-coating cleaning process was different: pre-coating cleaning was performed on a glass substrate which was the same as that in Example 1, so that a water drop contact angle on a surface of the glass substrate reached 40°. The pre-coating cleaning was specifically cleaning with water with a temperature of 55°C for 400s. (2) In Comparative example 4, a thickness of the SiO₂ layer was 8 nm, and a thickness of the AF film was 12 nm.

FIG. 6 further summarizes FTIR spectra of glass structural members including a same SiO₂ layer and a same AF film that are prepared from to-be-coated glass substrates with different water drop contact angles by using a same coating process, where a wave number corresponding to a dashed line is an infrared absorption peak of a Si-CH₂ bond. In FIG. 6, for implementations of different water drop contact angles of the to-be-coated glass substrates, reference may be made to the foregoing examples and Comparative examples of this application.

As can be seen from FIG. 6, when the water drop contact angle on the surface of the to-be-coated glass substrate is within a range of 10° to 30°, a Si-CH₂ bond (embodied by a characteristic absorption peak at the wave number of 645 cm⁻¹ in the infrared spectra in FIG. 6) is formed between the AF film and the SiO₂ layer below the AF film in the obtained glass structural member. The Si-CH₂ bond increases an adhesion of the AF film to the SiO₂ layer, which helps improve the eraser rubbing resistance of the glass structural member. When the water drop contact angle on the surface of the to-be-coated glass substrate is less than 10° (for example, 5°) or greater than 30° (for example, 40°), no Si-CH₂ bond is formed between the AF film and the SiO₂ layer below the AF film in the obtained glass structural member.

Table 2 below summarizes different water drop contact angles of glass substrates in Examples 6 to 10 and Comparative examples 3 to 4 after pre-coating cleaning, time to failure of eraser rubbing after coating and cleaning, and test results of the glass structural members prepared by using a coating process.

**Table 2**

| | Water drop contact angle after pre-coating cleaning | Thickness of a SiO₂ layer | Thickness of an AF film | Test result of a finished product | | |
|---|---|---|---|---|---|---|
| | | | | Time to failure of eraser rubbing | 24-hour alkaline sweat resistance | Mohs hardness limit load |
| Example 6 | 20° | 20 nm | 60 nm | 20000 | Passed | 6 g to 1400 g |
| Example 7 | 13° | 18 nm | 80 nm | 22000 | Passed | 6 g to 1400 g |
| Example 8 | 10° | 18 nm | 100 nm | 24000 | Passed | 6 g to 1400 g |
| Example 9 | 22° | 18 nm | 100 nm | 21000 | Passed | 6 g to 1200 g |
| Example 10 | 25° | 18 nm | 100 nm | 20000 | Passed | 6 g to 1400 g |
| Comparative example 3 | 5° | 8 nm | 12 nm | 6500 | Failed | 6 g to 300 g |
| Comparative example 4 | 40° | 8 nm | 12 nm | 4000 | Passed | 6 g to 300 g |

As can be seen from Table 2, the water drop contact angles reached after the glass substrates in Examples 6 to 10 of this application that have undergone pre-coating cleaning are different from those in Examples 1 to 5, but are also within the range of 10° to 30°. The glass structural members obtained after the dielectric layer and the AF film are formed on this basis can pass the 24-hour alkaline sweat resistance test, and have good eraser rubbing resistance and Mohs hardness scratch resistance, thus being better than the glass structural members prepared from the glass substrate having a water drop contact angle outside the range of 10° to 30° (Comparative examples 3 to 4).

The foregoing descriptions are merely example implementations of this application, and descriptions thereof are relatively specific and detailed, but cannot be construed as a limitation on the patent scope of this application. It should be noted that a person of ordinary skill in the art may make some variants and improvements without departing from the concept of this application, and the variants and improvements shall fall within the protection scope of this application. Therefore, the protection scope of the patent in this application shall be subject to the appended claims.

In this application, "and/or" describes an association relationship between associated objects, and indicates that three relationships may exist. For example, A and/or B may indicate that: only A exists, both A and B exist, and only B exists, where A and B may be singular or plural. The character "/" generally indicates an "or" relationship between the associated objects.

In the descriptions of this application, unless otherwise specified, "a plurality of" means two or more. "At least one" means one or more. "At least one of the following" or a similar expression thereof indicates any combination of these items, including a single item or any combination of a plurality of items. For example, "at least one of a, b, or c", or "at least one of a, b, and c" may indicate: a, b, c, a-b (namely, a and b), a-c, b-c, or a-b-c, where a, b, and c may be singular or plural.

In addition, the value range represented by "-" in this application is a range included by using values recorded before and after "-" as a minimum value and a maximum value respectively. Expressions of a parameter range in this application, for example, "greater than or equal to (≥)", "less than or equal to (≤)", "be... or greater", and "be... or less", all include this number. A value and a value range in embodiments of this application are approximate values. Due to impact of a manufacturing process/test method or the like, there may be an error within a specific range. A person skilled in the art may consider that the error is negligible.

## Claims

1. A glass structural member, wherein the glass structural member comprises a glass substrate, and a dielectric layer and an anti-fingerprint film that are sequentially stacked on a surface of one side of the glass substrate, the dielectric layer comprises a silicon dioxide layer disposed close to one side of the anti-fingerprint film, a constituent of the anti-fingerprint film contains a -CH₂-structure, and a Si-CH₂ bond is formed between the silicon dioxide layer and the anti-fingerprint film.

2. The glass structural member according to claim 1, wherein a sum of a thickness of the dielectric layer and a thickness of the anti-fingerprint film is 70 nm or greater.

3. The glass structural member according to claim 1 or 2, wherein a thickness of the silicon dioxide layer is 16 nm or greater.

4. The glass structural member according to claim 3, wherein the thickness of the silicon dioxide layer is within a range of 18 nm to 50 nm.

5. The glass structural member according to any one of claims 1 to 4, wherein the thickness of the anti-fingerprint film is 50 nm or greater.

6. The glass structural member according to claim 5, wherein the thickness of the anti-fingerprint film is within a range of 60 nm to 100 nm.

7. The glass structural member according to any one of claims 1 to 6, wherein the constituent of the anti-fingerprint film comprises a perfluoroalkyl compound or a polyfluoroalkyl compound containing the -CH₂- structure.

8. The glass structural member according to any one of claims 1 to 7, wherein the dielectric layer further comprises a silicon carbide layer or an aluminum oxide layer disposed close to one side of the glass substrate.

9. The glass structural member according to claim 8, wherein a thickness of the silicon carbide layer or the aluminum oxide layer is less than 3 nm.

10. The glass structural member according to any one of claims 1 to 9, wherein in the glass structural member, an exposed surface of the anti-fingerprint film has an initial water drop contact angle of 110° or greater and a water drop contact angle of greater than 100° after being rubbed by an eraser 13000 times.

11. The glass structural member according to any one of claims 1 to 10, wherein a load threshold for generating a scratch on the glass structural member under Mohs hardness of 6 is 750 g or greater.

12. The glass structural member according to any one of claims 1 to 11, wherein after the glass structural member soaked in simulated alkaline sweat with pH=9.5 is stored in a 70°C thermotank for 24 hours, no film falls off.

13. The glass structural member according to any one of claims 1 to 12, wherein the glass structural member has an average transmittance of ≥88% for light with a wavelength of 400 nm to 700 nm, and a Lab chromaticity b value satisfies: |b value|≤1.2.

14. The glass structural member according to any one of claims 1 to 13, wherein the glass substrate is strengthened glass-ceramics or strengthened common glass that does not contain a crystal phase.

15. The glass structural member according to any one of claims 1 to 14, wherein the glass substrate is strengthened glass-ceramics, and in molar percentage, the strengthened glass-ceramics comprises the following components: Li₂O: 10% to 25%, SiO₂: 58% to 72%, Na₂O and K₂O: 3% to 7%, Al₂O₃: 2% to 8%, P₂O₅+ZrO₂+TiO₂: 2% to 13%, MgO+CaO+ZnO: 0% to 3%, and B₂O₃: 0% to 5%.

16. The glass structural member according to claim 14 or 15, wherein the strengthened glass-ceramics comprises a glass phase and a crystal phase, and the crystal phase comprises at least one of quartz, spodumene, petalite, lithium silicate, lithium disilicate, and spinel; and a total mass content of the crystal phase in the strengthened glass-ceramics is greater than or equal to 20%.

17. The glass structural member according to claim 14, wherein in molar percentage, the strengthened common glass comprises the following components: SiO₂: 45% to 59.5%, Al₂O₃: 9% to 30%, MgO: 7% to 30%, ZnO: 0% to 5%, ZrO₂: 0% to 10%, La₂O₃: 0% to 10%, Li₂O: 5.5% to 15%, Na₂O: 1% to 5%, and K₂O: 2% to 5%.

18. A method for preparing a glass structural member, comprising:
performing, on a glass substrate, pre-coating cleaning selected from at least one of alkali cleaning, acid cleaning, and plasma treatment, such that a water drop contact angle of a surface of the glass substrate is within a range of 10° to 30°;
forming a dielectric layer comprising a silicon dioxide layer on a surface of one side of the glass substrate that has undergone the pre-coating cleaning; and
forming an anti-fingerprint film on the silicon dioxide layer, wherein a Si-CH₂ bond is formed between the silicon dioxide layer and the anti-fingerprint film.

19. The preparation method according to claim 18, wherein a pH of an alkali solution used for the alkali cleaning is 9 to 11, and a solute in the alkali solution comprises one or more of sodium metasilicate, NaOH, Na₂CO₃, and NaHCO₃; and a temperature of the alkali cleaning is within a range of 20°C to 95°C.

20. The preparation method according to claim 18 or 19, wherein a pH of an acid solution used for the acid cleaning is 2 to 4, and a solute in the acid solution comprises one or more of sulfuric acid, hydrochloric acid, nitric acid, and oxalic acid, and does not comprise hydrofluoric acid; and a temperature of the acid cleaning is within a range of 20°C to 95°C.

21. The preparation method according to any one of claims 18 to 20, wherein a device used for the plasma treatment comprises one or more of a box type, a flame type, and a glow type; and a power of the plasma treatment is in a range of 500 W to 1500 W, and treatment time is in a range of 30s to 1200s.

22. The preparation method according to any one of claims 18 to 21, wherein both the dielectric layer and the anti-fingerprint film are formed by vacuum coating; during the coating of the dielectric layer, a vacuum degree is ≤5×10⁻³ Pa, and a coating rate is ≤2 nm/min; during the coating of the anti-fingerprint film, a vacuum degree is ≤5×10⁻³ Pa, and a coating rate is ≤ 10 nm/min; and during the coating, a shielding gas is argon or nitrogen.

23. The preparation method according to any one of claims 18 to 22, wherein during or after the formation of the dielectric layer, the method further comprises performing plasma cleaning; wherein the plasma cleaning is performed in a coating device used for forming the dielectric layer.

24. A housing assembly, comprising the glass structural member according to any one of claims 1 to 17, or the glass structural member prepared by using the preparation method according to any one of claims 18 to 23.

25. An electronic device, comprising a housing assembled on an outer side of the electronic device and a circuit board located inside the housing, wherein the housing comprises the housing assembly according to claim 24 or the glass structural member according to any one of claims 1 to 17.

26. The electronic device according to claim 25, wherein the housing comprises a display cover assembled on a front side of the electronic device, and the display cover uses the housing assembly or the glass structural member.

27. The electronic device according to claim 25 or 26, wherein the housing comprises a rear cover assembled on a back side of the electronic device, and the rear cover uses the housing assembly or the glass structural member.

28. The electronic device according to any one of claims 25 to 27, wherein the electronic device further comprises a camera assembly located inside the housing, the housing comprises a camera protection cover, the camera protection cover covers the camera assembly, and the camera protection cover uses the housing assembly or the glass structural member.
